# EUROPEAN PATENT APPLICATION

(11) **EP 4 617 730 A1**
(43) Date of publication of application: **17.09.2025**
(21) Application number: 25151418.8
(22) Date of filing: 13.01.2025
(51) Int. Cl.: G01S 17/95, G01S 7/481, G01S 7/484, G01S 7/487

(54) **LIDAR SYSTEMS WITH HAZARDOUS-BEAM INDICATION**

(30) Priority: 15.03.2024 US 202418606606
(71) Applicant: ROSEMOUNT AEROSPACE INC., Burnsville, MN 55306-4898 (US)
(72) Inventor: RAY, Mark, Burnsville, MN (US)
(74) Representative: Dehns

(57) **Abstract**

Apparatus and associated methods relate to protecting ground crews from hazardous invisible-light beams of an activated LIDAR system. To protect such crews the LIDAR system is equipped with a hazardous-beam indicating system. The hazardous-beam indicating system is configured to project a visible-light indicating beam when the hazardous invisible-light beam is projected, at least during ground operations. The visible-light indicating beam is transmitted along an axis of projection shared with the hazardous invisible-light beam. Such a visible-light indicating beam is perceivable to persons whose eyes receive such a visible-light indicating beam. Such persons are thereby alerted to the presence of the corresponding hazardous invisible-light beam transmitted concurrently with the visible-light indicating beam.

## Description

### BACKGROUND

Airborne LIDAR (an acronym for "light detection and ranging" or "laser imaging, detection, and ranging") instruments are used to detect and measure various metrics of an atmosphere exterior to an aircraft. For example, some LIDAR systems are configured to measure various cloud metrics, such as, for example, ice/liquid determination, droplet or particle sizes, density of particles or droplets. Some LIDAR systems are configured to measure metrics of flight conditions, such as, for example, airspeed, angle of attack, and angle of side slip. In some LIDAR systems, specific wavelengths of light are most useful to obtain the detections or measurements desired. In other cases, the transmitted wavelength is not critical for best operation, and therefore selection of wavelength may be based on cost and/or availability of the optical components. For an airborne LIDAR, low observability of the transmitted light is another consideration for wavelength selection. Bright, visible light, especially in the form of an intense flash, could startle pilots and passengers. Low power visible light or invisible ultraviolet or infrared light can be used to prevent such a startle response. Invisible near infrared wavelengths can meet the requirements of both low-cost optical components and invisibility of the transmitted light.

The invisible LIDAR light of near infrared light beams, however, can pose an eye hazard for someone directly viewing such light beams emanating from the LIDAR system, especially when the LIDAR light source is a laser. Usually, the nominal hazard zone is between a few meters to tens of meters, depending on the radiance and modulation pattern of the transmitted light. Beyond such a hazard zone, the radiance of the light beam is attenuated such that it no longer poses a hazard to persons. Such a hazard zone is small enough to ensure that the transmitted light is not hazardous during flight, as no persons would be located so close to and exterior to the aircraft projecting such a light beam into the atmosphere. This safety concern is instead reserved for ground crews servicing the plane while the aircraft is either in the hangar or on the tarmac. Safety interlocks can be implemented to disable operation in response to weight-on-wheels detection or low airspeed measurement. Such interlocks can be defeated (either intentionally or accidentally) by servicing crews or other personnel, though. Moreover, when instruments are tested and/or serviced, such interlocks are intentionally defeated as the aircraft is parked on the ground. For example, an airborne LIDAR system can be activated as part of a ground check to ensure that the LIDAR system is functioning properly before takeoff. During such a ground check, the ground crew would likely be working within the hazard zone of such an activated LIDAR system. Because of the light beam's invisibility, the ground crew could unknowingly stare into the light beam transmitted by the LIDAR system.

The level of hazard associated with a given light beam corresponds to the radiance of the light beam and to the exposure time to such a light beam of that radiance. Reducing radiance of the beam reduces the level of hazard, as does reducing the time of exposure to such a light beam. Typically, the radiance of the beam cannot be reduced, as the radiance is established for measurement considerations, and not for safety considerations. After looking into a light beam that is visible, especially if the light beam is very intense, a person will immediately and automatically blink and/or look away from such a visible beam within a fraction of as second. Typically, a person's response time for such reactions is on the order of ¼ of a second. In addition, the person's pupil will automatically constrict from a maximum diameter of about 7 mm to a minimum diameter of about 2 or 3 mm due to exposure to such intense light. Such pupil constriction, however, has a response time that is greater than the response time for blinking and slows with increasing age of the person. Invisible light, however, does not induce such automatic blink reflexes or pupil constrictions.

### SUMMARY

Some embodiments are related to an aircraft system for determining metrics of a cloud atmosphere. The aircraft system includes an invisible light generator configured to generate light invisible to the human eye. The aircraft system includes a visible light generator configured to generate light visible to the human eye. The aircraft system includes a dichroic combiner aligned with each of the visible and invisible light generators to receive and combine the light invisible to the human eye and the light visible to the human eye into a combined beam. The aircraft system includes an optical projector configured to receive the combined beam and to project the combined beam from an aircraft into an atmosphere external to the aircraft. The light invisible to the human eye is projected into a first projection field of view that is wholly within and surrounded by a second projection field in which the light visible to the human eye is projected. The aircraft system includes a detector configured to detect a reflected portion of the light invisible to the human eye reflected by a cloud atmosphere. The aircraft system also includes a cloud metric calculator configured to determine cloud metrics of the cloud atmosphere based on the backscattered portion detected.

Some embodiments relate to a method for determining metrics of a cloud atmosphere. The method includes generating, via a first light generator, light invisible to the human eye. The method includes generating, via a second light generator, light visible to the human eye. The method includes receiving and combining, via a dichroic combiner, the light invisible to the human eye and the light visible to the human eye into a combined beam. The method includes receiving and projecting, via an optical projector, the combined beam from an aircraft into an atmosphere external to the aircraft. The light invisible to the human eye is projected into a first projection field of view that is wholly within and surrounded by a second projection field in which the light visible to the human eye is projected. The method includes detecting, via a detector, a reflected portion of the light invisible to the human eye reflected by a cloud atmosphere. The method also includes determining, via a cloud metric calculator, cloud metrics of the cloud atmosphere based on the backscattered portion detected.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1 is a perspective view of an aircraft equipped with a LIDAR system equipped with a hazardous-beam indicating system.
FIG. 2 is a perspective view of LIDAR system projecting a combined light-beam that includes both a visible-light indicating beam and a hazardous invisible-light beam.
FIG. 3 is a schematic diagram of an embodiment of a light-projection system of an aircraft LIDAR system.
FIG. 4 is schematic diagram of another embodiment of a LIDAR system for measuring cloud metrics that includes a visible light indicating beam.
FIG. 5 is a graph of a beam radiance vs distance for a combined beam of a visible-light indicating beam and a hazardous invisible-light beam.

### DETAILED DESCRIPTION

To protect ground crews from hazardous invisible-light beams of an activated LIDAR system, such a LIDAR system can be equipped with a hazardous-beam indicating system. Such a hazardous-beam indicating system can be configured to project a visible-light indicating beam when the hazardous invisible-light beam is projected, at least during ground operations. The visible-light indicating beam can be transmitted along an axis of projection shared with the hazardous invisible-light beam. Such a visible-light indicating beam would be perceivable to persons whose eyes receive such a visible-light indicating beam. Such persons would thereby be alerted to the presence of the corresponding hazardous invisible-light beam transmitted concurrently with the visible-light indicating beam. The visible-light indicating beam can be projected with sufficient radiance to cause an automatic blink reflex and/or pupil constriction, thereby protecting the eyes of any person looking into such a composite beam of light. To ensure that persons are alerted whenever they are nearby the hazardous invisible-light beam, the visible-light indicating beam that is concurrently projected can be configured to entirely encompass and surround the hazardous invisible-light beam to which the visible-light indicating beam is alerting.

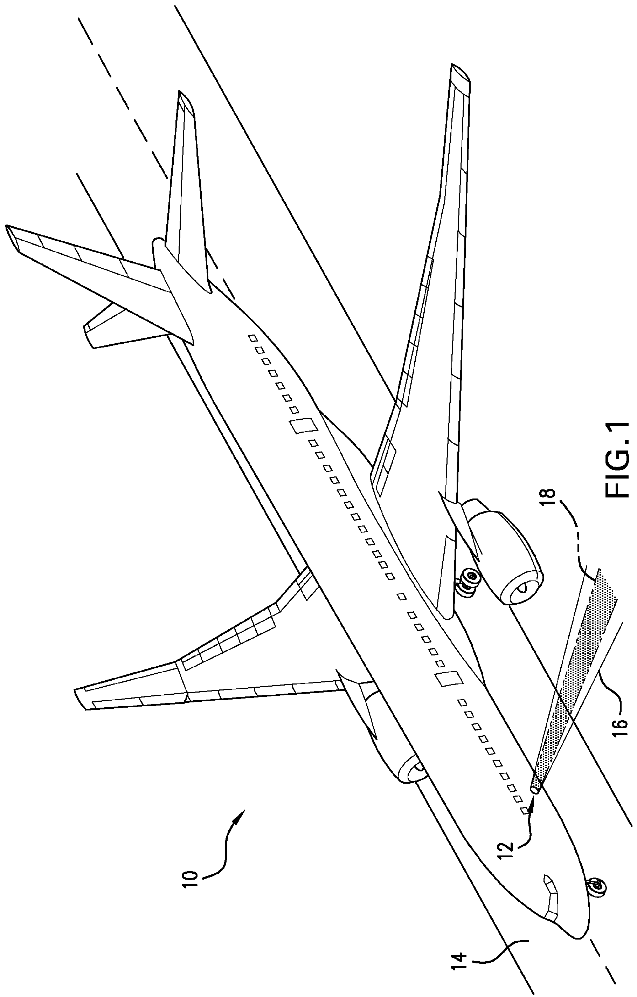

FIG. 1 is a perspective view of an aircraft equipped with a LIDAR system equipped with a hazardous-beam indicating system. In FIG. 1, aircraft 10 has LIDAR system 12, which, for example, might be configured for measuring metrics of a cloud atmosphere. LIDAR system 12 is projecting combined beam 14, which includes visible-light indicating beam 16 and hazardous invisible-light beam 18. "Hazardous invisible-light beam" 18 is referred to as such to indicate that it includes light that is both hazardous and not visible to the human eye. "Visible-light indicating beam" 16 is referred to as such to indicate that it includes light that is both visible to the human eye and configured to indicate location of hazardous invisible-light beam 18. Hazardous invisible-light beam 18 is projected into a first projection field of view that is wholly within and surrounded by a second projection field in which visible-light indicating beam 16 is projected. Visible-light indicating beam 16 has a radiance that is sufficient to cause blink reflex and/or pupil constriction in a person who happens to look into the source of combined beam 14, thereby preventing damage to the person's eye.

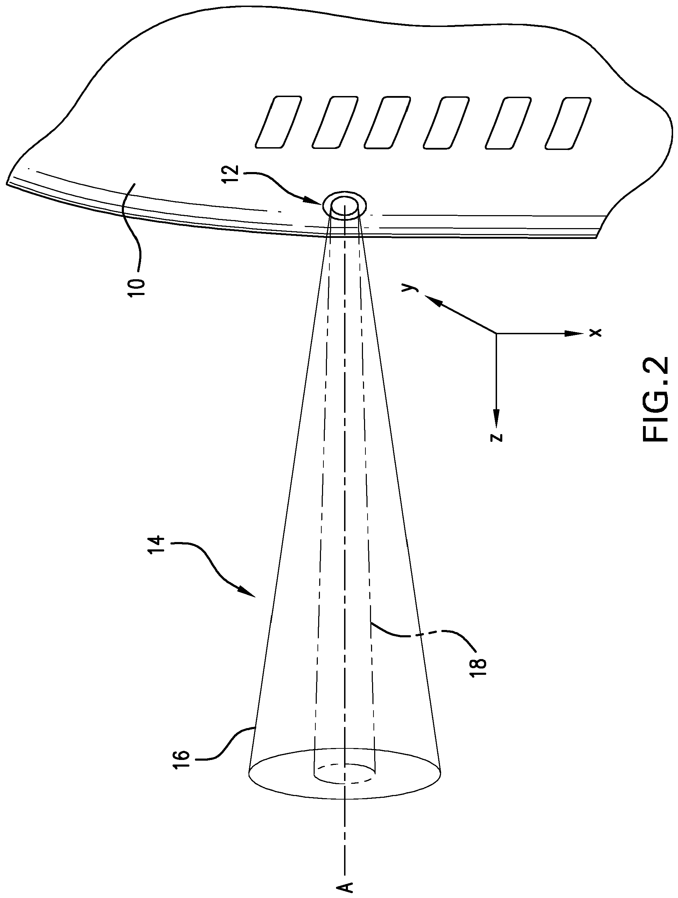

FIG. 2 is a perspective view of LIDAR system 12 projecting combined light-beam 14 that includes both visible-light indicating beam 16 and hazardous invisible-light beam 18. As shown in FIG. 2, LIDAR system 12 is projecting hazardous invisible-light beam 18 along projection axis A. Hazardous invisible-light beam 18 is characterized by an angle of divergence θ. Although hazardous invisible-light beam 18 is depicted as being conical (i.e., having rotational symmetry about projection axis A), in some embodiments, the angle of divergence can be different in the x and y directions. In such embodiments, hazardous invisible-light beam 18 can be characterized by angles of divergence θₓ and θ_{y} in the x and y directions, respectively.

In addition to projecting hazardous invisible-light beam 18 along projection axis A, LIDAR system 12 is also projecting visible-light indicating beam 16 along projection axis A. Visible-light indicating beam 16 is characterized by an angle of divergence φ. Although visible-light indicating beam 16 is depicted as being conical, in some embodiments, the angle of divergence can be different in the x and y directions. In such embodiments, hazardous invisible-light beam 18 can be characterized by angles of divergence φₓ and φ_{y} in the x and y directions, respectively. Although both hazardous invisible-light beam 18 and visible-light indicating beam 16 are depicted as diverging, nowhere along the length of projection axis A does hazardous invisible-light beam 18 emerge from intersection with visible-light indicating beam 16. The intersection of hazardous invisible-light beam 18 with visible-light indicating beam 16 is coextensive with hazardous invisible-light beam 18 itself. Such a configuration ensures that should a person inadvertently gaze into hazardous invisible-light beam 18, that person will also be gazing into visible-light indicating beam 16, which would alert such person to the hazard posed by hazardous invisible-light beam 18.

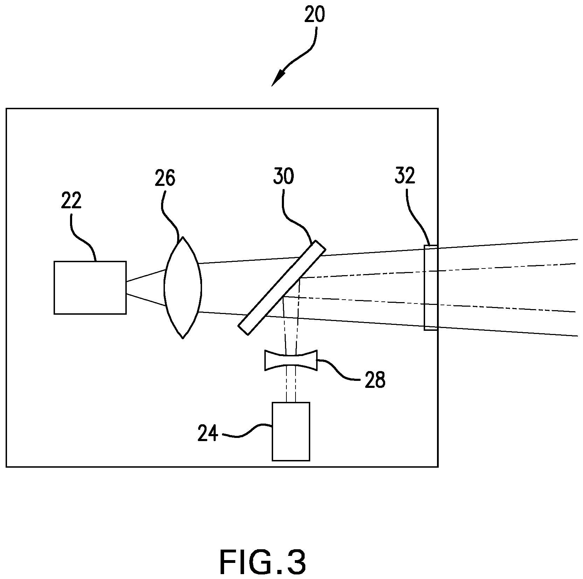

FIG. 3 is a schematic diagram of an embodiment of a light-projection system of a aircraft LIDAR system. As shown in FIG. 3, light projection system 20 includes visible-light generator 22, invisible-light generator 24, lenses 26 and 28, dichroic combiner 30, and exit aperture 32. Visible-light generator 22 is configured to generate light visible to the human eye, which will ultimately be projected by light projection system 20 as visible-light indicating beam 16 (FIG. 2). Visible-light generator 22 can be any type of lamp that can generate visible light. For example, visible light generator 22 can be an incandescent lamp, a light-emitting diode (LED), an arc lamp, etc. In the depicted embodiment visible-light projector 22 generates visible light that projects from visible-light projector in an uncollimated fashion. Such a beam shape can be produced, for example, by an LED as a source of light. Lens 26 is configured to shape (e.g., focus, collimate, diverge etc.) the light projected from visible-light generator 22. In the depicted embodiment, lens 26 is configured to collimate the beam of light projected from visible-light generator 22.

Invisible-light generator 24 is configured to generate light invisible to the human eye, which will ultimately be projected by light projection system 20 as hazardous invisible-light beam 18 (FIG. 2). Invisible-light generator 24 can be any type of light generator that can generate invisible light. For example, visible light projector 24 can be a laser, an incandescent lamp, a light-emitting diode (LED), an arc lamp, etc. In the depicted embodiment invisible-light generator 24 generates invisible light that projects from invisible-light generator 24 in a collimated fashion. Such a beam shape can be produced, for example, by a laser as a source of light. Lens 28 is configured to shape (e.g., focus, collimate, diverge, etc.) the light projected from invisible-light generator 24. In the depicted embodiment, lens 28 is configured to diverge the beam of light projected from invisible-light generator 24. Such shaping of the beams can be done such that hazardous invisible-light beam 18 remains entirely within visible-light indicating beam 16 (as shown in FIG. 2), at least until a distance where the radiance of hazardous invisible-light beam 18 is no longer hazardous to persons. Typically, this is done by selecting optical elements that ensure that the angle of divergence φ of visible-light indicating beam 16 is greater than (or at least equal to) the angle of divergence θ of hazardous invisible-light beam 18. In some embodiments, a ratio of the angle of divergence θ of hazardous invisible-light beam 18 to the angle of divergence φ of visible-light indicating beam 16 is less than 0.98, 0.95, 0.9, or 0.75. Such a ratio can be selected to ensure that a person is alerted to the presence of hazardous invisible-light beam 18 in time to avert his/her eyes before eye damage begins. In some embodiments, the angle of divergence φ of visible-light indicating beam 16 is between 8 and 15 mrad, and the the angle of divergence θ of hazardous invisible-light beam 18 is less than 4 mrad, for example.

Dichroic combiner 30 is configured to receive and combine the visible light generated and projected by visible-light generator 22 and the invisible light generated and projected by invisible-light generator 24 into combined beam 14 (FIG. 2). Combined beam 14 is projected through exit aperture 32 of LIDAR system 12 and into the atmosphere external to the aircraft. The portion of combined beam 14 that is visible is visible-light indicating beam 16, and the portion of combined beam 14 that is invisible is hazardous invisible-light beam 18. Hazardous invisible-light beam 18 is projected into a first projection field of view that is wholly within and surrounded by a second projection field in which is projected the visible-light indicating beam 16. Although no additional optical elements are depicted in the FIG. 3 embodiment, additional optical elements can be used to shape and/or steer combined beam 14. For example, in some embodiments, a lens and/or a mirror (or prism) can be interposed between Dichroic combiner 30 and exit aperture 32 to further shape and/or steer combined beam 14.

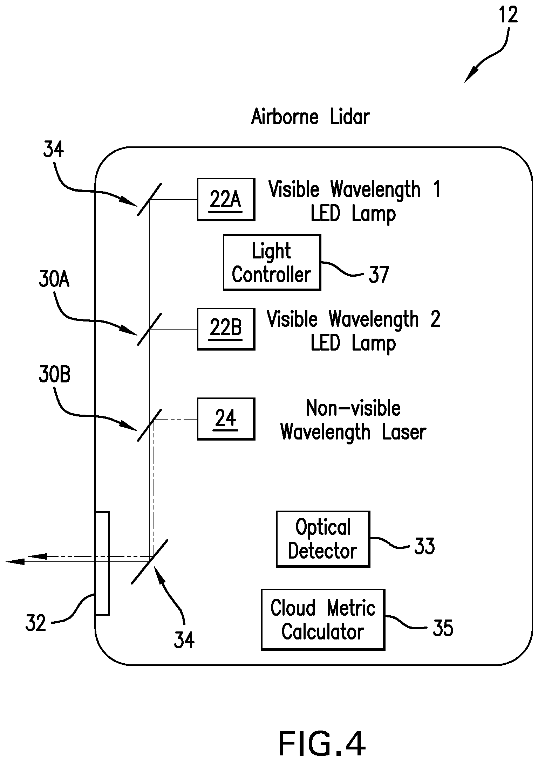

FIG. 4 is schematic diagram of another embodiment of a LIDAR system for measuring cloud metrics that includes a visible light indicating beam. In FIG. 4, LIDAR system 12 includes optical detector 33 and cloud metric calculator 35 in addition to various elements of a light projection system. In the FIG. 4 embodiment, the light projection system includes visible-light generator 22A, visible-light generator 22B, invisible light generator 24, mirrors 34, dichroic combiners 30A and 30B, exit aperture 32, and light controller 37.

First visible-light generator 22A is configured to generate light visible to the human eye of a first color as characterized by a first visible wavelength. Second visible-light generator 22b is configured to generate light visible to the human eye of a second color as characterized by a second visible wavelength. The light generated by first and second visible-light generators 22A and 22B are combined by first dichroic combiner 30A to form a single combined beam of visible light having a color determined by the combination of light of the first and second wavelengths. For example, dichroic combiner 30A can be configured to transmit light of the first visible wavelength and to reflect light of the second visible wavelength. First visible-light generator 22A can be configured to generate light of a green color, for example, and second visible-light generator can be configured to generate light of a red color. By varying the intensities of light generated by first and second visible-light generators 22A and 22B, the color of the single combined beam of visible light can be varied (e.g., from green to red with all intermediate colors therebetween). The single combined beam of visible light will ultimately be projected by light projection system 20 as visible-light indicating beam 16. The color of such a visible-light indicating beam can be controlled to indicate a level of hazard associated with hazardous invisible-light beam 18.

Light controller 37 is configured to control first and second visible-light generators 22A and 22B. Light controller 37 can be configured to control both when first and second visible-light generators 22A and 22B are actuated and the color of the single combined beam of visible light. For example, light controller 37 can activate first and/or second visible-light generators 22A and/or 22B when needed to alert ground crew of hazardous invisible-light beam 18. Light controller 37 can activate first and/or second visible-light generators 22A and/or 22B in response to activation of invisible-light generator 24 and/or in response to a weight-on-wheels signal. For example, in some embodiments, light controller 37 activates first and/or second visible-light generators 22A and/or 22B in response to both a weight-on-wheels signal and invisible-light generator 24 being activated. Light controller 37 can also control color of the single combined beam of visible light by controlling the relative amplitudes of light generated by first and second visible-light generators 22A and 22B. Such color of single combined beam of visible light can be controlled to indicate whether invisible-light generator 24 is activated and/or the relative danger associated with hazardous invisible-light beam 18, for example. In some embodiments, the single combined beam of visible light can be controlled to be green or red, in response to invisible-light generator 24 not being activated or being activated, respectively. In other embodiments, the single combined beam of visible light can be controlled to be any color between green or red, wherein such color is indicative of a relative radiance of hazardous invisible-light beam 18 (e.g., green for low radiance, yellow and orange for increasing radiance, and red for high radiance).

Invisible-light generator 24 is configured to generate light invisible to the human eye, which will ultimately be projected by light projection system 20 as hazardous invisible-light beam 18. Invisible-light generator 24 typically includes a laser, such as, for example, an infrared laser. In many embodiments, invisible-light generator generates pulses of invisible light which are projected into the cloud atmosphere. In some embodiments, the pulses are transmitted through a polarizing filter, thereby creating polarized pulses of invisible light. Such pulses are then reflected by particles, such as ice or water droplets within the cloud atmosphere. The amplitude, shape and polarity of the projected pulses reflected by the particles within the cloud atmosphere are indicative of the type (e.g., ice or liquid water), the sizes of the particles, the density of the particles, etc., as is known in the art. Invisible-light generator 24 can be configured to diverge the beam of light projected from invisible-light generator 24, even if only modestly, so that the danger posed by the beam decreases with distance at a target rate. Such shaping of the beams can be done such that hazardous invisible-light beam 18 remains entirely within visible-light indicating beam 16, at least until a distance where the radiance of hazardous invisible-light beam 18 is no longer hazardous to persons.

Dichroic combiner 30B is configured to receive and combine the single combined beam of visible light and hazardous invisible-light beam 18 projected by invisible-light generator 24 into combined beam 14. For example, dichroic combiner 30B can be configured to transmit light of the first and second visible wavelengths the single combined beam of visible light and to reflect light of the invisible wavelengths of hazardous invisible-light beam 18. In other examples, dichroic combiner 30B can be configured to reflect light of the first and second visible wavelengths the single combined beam of visible light and to transmit light of the invisible wavelengths of hazardous invisible-light beam 18, Combined beam 14 is then projected through exit aperture 32 of LIDAR system 12 and into the atmosphere external to the aircraft. The portion of combined beam 14 that is visible is visible-light indicating beam 16, and the portion of combined beam 14 that is invisible is hazardous invisible-light beam 18. Hazardous invisible-light beam 18 is projected into a first projection field of view that is wholly within and surrounded by a second projection field in which is projected the visible-light indicating beam 16.

Light detector 33 is configured to detect a reflected portion of the light invisible to the human eye reflected by a cloud atmosphere. As described above, such reflected portions are indicative of the particles from which the reflected portion had reflected. The shape of the reflected pulses (e.g., the amplitudes and shape of the decay of the pulses, etc.) are indicative of the nature of the particles from which the light has been reflected. Light detector 33 generates a signal that is indicative of the shape of the reflected portions. Cloud metric calculator 35 is configured to determine cloud metrics of the cloud atmosphere based on the signal indicative of the shape of the reflected portion as generated by light detector 33.

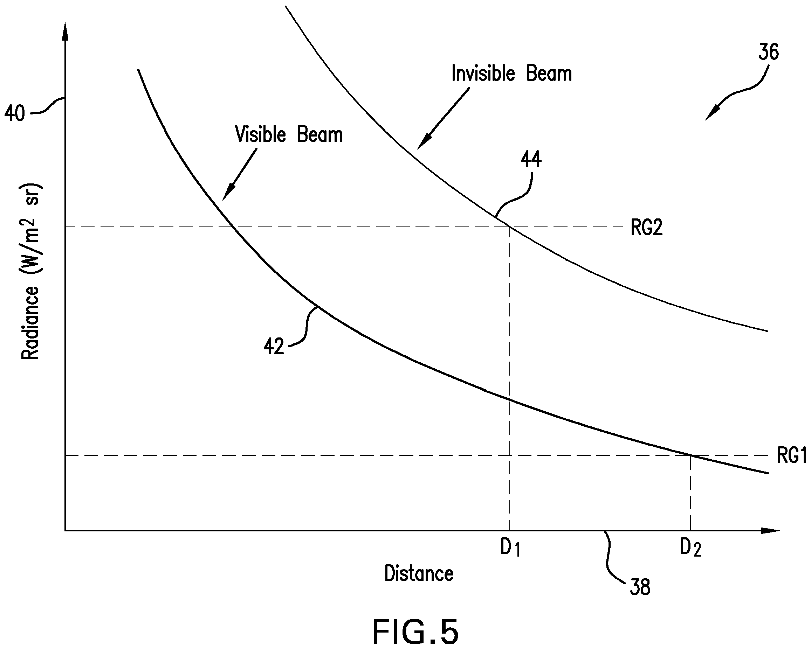

FIG. 5 is a graph of a beam radiance vs distance for a combined beam of a visible-light indicating beam and a hazardous invisible-light beam. In FIG. 5, graph 36 includes horizontal axis 38 and vertical axis 40. Horizontal axis 38 is indicative of distance of projection from a LIDAR system, such as LIDAR system 12 depicted in FIG. 1. Vertical axis 40 is indicative of radiance of light in Watts per square meter. Also depicted in graph 36 are radiance-distance relations 42 and 44. Radiance-distance relation 42 relates radiance of visible-light indicating beam 16 with distance of projection. As indicated by radiance-distance relation 42, the radiance of visible-light indicating beam 16 is greatest at its source (i.e., at the exit aperture 32 of LIDAR system 12 as depicted in FIG. 2). Visible-light indicating beam 16 diverges as the projection distance increases, thereby decreasing the radiance of visible-light indicating beam 16. Such a radiance-distance relation often behaves as an inverse square relation.

Radiance-distance relation 44 relates radiance of hazardous invisible-light beam 18 with distance of projection. As indicated by radiance-distance relation 44, the radiance of hazardous invisible-light beam 18 is also greatest at its source (i.e., at the exit aperture 32 of LIDAR system 12 as depicted in FIG. 2). Hazardous invisible-light beam 16 diverges as the projection distance increases, thereby decreasing the radiance of hazardous invisible-light beam 18. Such a radiance-distance relation often behaves as an inverse square relation.

Noteworthy in graph 36 are the relative intensities of visible-light indicating beam 16 and hazardous invisible-light beam 18. Two specific upper radiance thresholds - RG1 and RG2 - are identified on graph 36. Classification of lamps as RG1 or RG2, with the accompanying radiance thresholds, is promulgated by the International Electrotechnical Commission (IEC) as posing as a specific risk level. Lamps providing radiances between the RG1 radiance threshold and the RG2 radiance threshold provide light with a radiance level between 10⁵W/m²sr and the and a radiance level of 4×10⁶W/m²sr. Light with radiance greater than the RG2 radiance threshold is bright enough to be seen in daylight and to automatically induce a blink response. Light with radiance less than the RG1 radiance threshold is bright enough to be seen in the daylight, but not bright enough to automatically induce a blink response. The maximum exposure time limit that is safe for a human looking into light with classifications of RG1 and RG2 are 100 seconds and ¼ second, respectively.

As shown in graph 36, radiance-distance relation 44 drops below the RG2 radiance threshold at a distance D1 from the source of the hazardous invisible-light beam 18. Radiance-distance relation 42 drops below the RG1 radiance threshold at a distance D2 from the source of the visible-light indicating beam 16, where distance D2 is greater than distance D1. When distance D2 is greater than distance D1, a person who stares combined beam 14 will see visible-light indicating beam 16, and thereby be alerted to the activation of hazardous invisible-light beam 18. Visible light generator 22 can be designed to generate visible light with sufficient energy so that the radiance of visible-light indicating beam 16 is greater than the RG1 radiance threshold at the distance where hazardous invisible-light beam 18 falls below the RG2 radiance threshold.

### Discussion of Possible Embodiments

The following are non-exclusive descriptions of possible embodiments of the present invention.

Apparatus and associated methods relate to an aircraft system for determining metrics of a cloud atmosphere. The aircraft system includes an invisible light generator configured to generate light invisible to the human eye. The aircraft system includes a visible light generator configured to generate light visible to the human eye. The aircraft system includes a dichroic combiner aligned with each of the visible and invisible light generators to receive and combine the light invisible to the human eye and the light visible to the human eye into a combined beam. The aircraft system includes an optical projector configured to receive the combined beam and to project the combined beam from an aircraft into an atmosphere external to the aircraft. The light invisible to the human eye is projected into a first projection field of view that is wholly within and surrounded by a second projection field in which the light visible to the human eye is projected. The aircraft system includes a detector configured to detect a reflected portion of the light invisible to the human eye reflected by a cloud atmosphere. The aircraft system also includes a cloud metric calculator configured to determine cloud metrics of the cloud atmosphere based on the backscattered portion detected.

The system of the preceding paragraph can optionally include, additionally and/or alternatively, any one or more of the following features, configurations and/or additional components:
A further embodiment of the foregoing system can further include a light controller configured to control operation of the visible light generator.

A further embodiment of any of the foregoing systems, wherein the light controller can be configured to turn off the invisible light generator in response to a weight-on-wheel signal indicating no weight on a landing gear of the aircraft.

A further embodiment of any of the foregoing systems, wherein the light generator can be configured to control color of the visible light to indicate a hazard level of the light invisible to the human eye generated by the first light generator.

A further embodiment of any of the foregoing systems, wherein the light controller can be configured to cause the visible light generator to generate light that is visible to the human eye that is green, yellow, or red, based on a corresponding increasing level of radiance of the light invisible to the human eye generated by the invisible light generator.

A further embodiment of any of the foregoing systems, wherein the light controller can be further configured to control operation of the invisible light controller.

A further embodiment of any of the foregoing systems, wherein the light controller can be configured to temporally control operation of both the invisible and visible light generators such that when the invisible light generator is generating light invisible to the human eye, the visible light generator is also generating light visible to the human eye.

A further embodiment of any of the foregoing systems, wherein the light controller can be configured to cause the invisible light generator to generate pulses of light invisible to the human eye.

A further embodiment of any of the foregoing systems, wherein the cloud metric calculator can be configured to determine cloud metrics of the cloud atmosphere based on pulse metrics of the backscattered portion of the pulses of light invisible to the human eye backscattered by the cloud atmosphere.

A further embodiment of any of the foregoing systems, wherein the first projection field of view can be characterized by a first angle of divergence and the second projection field of view is characterized by a second angle of divergence. The first angle of divergence can be less than the second angle of divergence.

A further embodiment of any of the foregoing systems, wherein a ratio of the first angle of divergence to the second angle of divergence can be less than 0.9.

A further embodiment of any of the foregoing systems, wherein the first angle of divergence can be less than 4 mrad.

A further embodiment of any of the foregoing systems, wherein the second angle of divergence can be between 8 and 15 mrad.

A further embodiment of any of the foregoing systems, wherein the dichroic combiner can be configured to transmit the light invisible to the human eye therethrough and to reflect the light visible to the human eye.

A further embodiment of any of the foregoing systems, wherein a power radiance of the light visible to the human eye can be between 10³W/m²sr and 4×10⁶W/m²sr at a distance from the optical projector at which the light invisible to the human eye is safe to the human eye.

A further embodiment of any of the foregoing systems, wherein the invisible light generator can include an infrared laser.

A further embodiment of any of the foregoing systems, wherein the visible light generator can include a Light Emitting Diode (LED).

A further embodiment of any of the foregoing systems can further include a lens located between the visible light generator and the dichroic combiner, the lens configured to shape the light visible to the human eye so that the light visible to the human eye diverges with an equal or greater than equal angle of divergence than the light invisible to the human eye as generated by the invisible light generator.

A further embodiment of any of the foregoing systems wherein an intersection of the invisible beam of light with the visible beam of light can be coextensive with the invisible beam of light.

Some embodiments relate to a method for determining metrics of a cloud atmosphere. The method includes generating, via a first light generator, light invisible to the human eye. The method includes generating, via a second light generator, light visible to the human eye. The method includes receiving and combining, via a dichroic combiner, the light invisible to the human eye and the light visible to the human eye into a combined beam. The method includes receiving and projecting, via an optical projector, the combined beam from an aircraft into an atmosphere external to the aircraft. The light invisible to the human eye is projected into a first projection field of view that is wholly within and surrounded by a second projection field in which the light visible to the human eye is projected. The method includes detecting, via a detector, a reflected portion of the light invisible to the human eye reflected by a cloud atmosphere. The method also includes determining, via a cloud metric calculator, cloud metrics of the cloud atmosphere based on the backscattered portion detected.

It will be recognized that the invention is not limited to the implementations so described but can be practiced with modification and alteration without departing from the scope of the appended claims. For example, the above implementations may include specific combinations of features. However, the above implementations are not limited in this regard, and, in various implementations, the above implementations may include the undertaking only a subset of such features, undertaking a different order of such features, undertaking a different combination of such features, and/or undertaking additional features than those features explicitly listed. The scope of the invention should, therefore, be determined with reference to the appended claims, along with the full scope of equivalents to which such claims are entitled.

## Claims

1. An aircraft system for determining metrics of a cloud atmosphere, the aircraft system comprising:
an invisible light generator (24) configured to generate light invisible to the human eye;
a visible light generator (22) configured to generate light visible to the human eye;
a dichroic combiner (30) aligned with each of the visible (22) and invisible light generators (24) to receive and combine the light invisible to the human eye and the light visible to the human eye into a combined beam;
an optical projector (22) configured to receive the combined beam and to project the combined beam from an aircraft into an atmosphere external to the aircraft, the light invisible to the human eye projected into a first projection field of view that is wholly within and surrounded by a second projection field in which the light visible to the human eye is projected.
a detector (33) configured to detect a reflected portion of the light invisible to the human eye reflected by a cloud atmosphere; and
a cloud metric calculator (35) configured to determine cloud metrics of the cloud atmosphere based on a reflected portion detected.

2. The aircraft system of claim 1, further comprising:
a light controller (37) configured to control operation of the visible light generator (22).

3. The aircraft system of claim 2, wherein the light controller (37) is configured to turn off the invisible light generator (24) in response to a weight-on-wheel signal indicating no weight on a landing gear of the aircraft.

4. The aircraft system of claim 2, wherein the light generator is configured to control color of the visible light to indicate a hazard level of the light invisible to the human eye generated by the first light generator.

5. The aircraft system of claim 4, wherein the light controller is configured to cause the visible light generator to generate light that is visible to the human eye that is green, yellow, or red, based on a corresponding increasing level of radiance of the light invisible to the human eye generated by the invisible light generator (24).

6. The aircraft system of claim 2, wherein the light controller is further configured to control operation of the invisible light controller.

7. The aircraft system of claim 6, wherein the light controller is configured to temporally control operation of both the invisible and visible light generators such that when the invisible light generator (24) is generating light invisible to the human eye, the visible light generator is also generating light visible to the human eye.

8. The aircraft system of claim 6, wherein the light controller is configured to cause the invisible light generator (24) to generate pulses of light invisible to the human eye.

9. The aircraft system of any preceding claim, wherein the cloud metric calculator is configured to determine cloud metrics of the cloud atmosphere based on pulse metrics of the backscattered portion of the pulses of light invisible to the human eye backscattered by the cloud atmosphere.

10. The aircraft system of claim 1, wherein the first projection field of view is **characterized by** a first angle of divergence and the second projection field of view is **characterized by** a second angle of divergence, wherein the first angle of divergence is less than the second angle of divergence.

11. The aircraft system of claim 10, wherein a ratio of the first angle of divergence to the second angle of divergence is less than 0.9, or wherein the first angle of divergence is less than 4 mrad, and optionally wherein the second angle of divergence is between 8 and 15 mrad.

12. The aircraft system of any preceding claim, wherein the dichroic combiner is configured to transmit the light invisible to the human eye therethrough and to reflect the light visible to the human eye.

13. The aircraft system of any preceding claim, wherein a power radiance of the light visible to the human eye is between 10⁵W/m²sr and 4×10⁶W/m²sr at a distance from the optical projector at which the light invisible to the human eye is safe to the human eye, and/or wherein the invisible light generator (24) includes an infrared laser, and/or wherein the visible light generator includes a Light Emitting Diode (LED).

14. The aircraft system of any preceding claim, further comprising:
a lens located between the visible light generator and the dichroic combiner, the lens configured to shape the light visible to the human eye so that the light visible to the human eye diverges with an equal or greater than equal angle of divergence than the light invisible to the human eye as generated by the invisible light generator (24) and/or wherein an intersection of the invisible beam of light with the visible beam of light is coextensive with the invisible beam of light.

15. A method for determining metrics of a cloud atmosphere, the method comprising:
generating, via a first light generator, light invisible to the human eye;
generating, via a second light generator, light visible to the human eye;
receiving and combining, via a dichroic combiner, the light invisible to the human eye and the light visible to the human eye into a combined beam;
receiving and projecting, via an optical projector, the combined beam from an aircraft into an atmosphere external to the aircraft, the light invisible to the human eye projected into a first projection field of view that is wholly within and surrounded by a second projection field in which the light visible to the human eye is projected;
detecting, via a detector, a reflected portion of the light invisible to the human eye reflected by a cloud atmosphere; and
determining, via a cloud metric calculator, cloud metrics of the cloud atmosphere based on the backscattered portion detected.
